# EUROPEAN PATENT APPLICATION

(11) **EP 4 576 125 A1**
(43) Date of publication of application: **25.06.2025**
(21) Application number: 23854718.6
(22) Date of filing: 26.06.2023
(51) Int. Cl.: H01B 7/02, H01B 13/14, H02K 3/02, H02K 3/30

(54) **INSULATED ELECTRIC WIRE, MANUFACTURING METHOD THEREFOR, AND COIL, ROTARY ELECTRIC MACHINE, AND ELECTRICAL AND ELECTRONIC EQUIPMENT USING SAID INSULATED ELECTRIC WIRE**

(30) Priority: 15.08.2022 JP 2022129364
(71) Applicant: Essex Furukawa Magnet Wire Japan Co., Ltd., Tokyo 101-0047 (JP)
(72) Inventor: YOSHIDA, Sho, Tokyo 100-8322 (JP); MUTO, Daisuke, Tokyo 101-0047 (JP)
(74) Representative: Forstmeyer, Dietmar
(86) International application number: PCT/JP2023/023603
(87) International publication number: WO 2024/038680

(57) **Abstract**

An insulated wire including a conductor and a resin coating layer covering a periphery of the conductor, wherein the conductor is an aluminum conductor surface-treated with CO₂ plasma, and at least a portion of the resin coating layer in contact with the conductor includes at least one kind of a polyaryletherketone resin and a polyphenylene sulfide resin.

## Description

### FIELD OF THE INVENTION

The present invention relates to an insulated wire, a method of producing the same, and a coil, a rotating electrical machine, and an electrical or electronic equipment using the insulated wire.

### BACKGROUND OF THE INVENTION

In an inverter-related equipment (such as coils for an electrical or electronic equipment, including high-speed switching elements, inverter motors, transformers, and the like), an insulated wire in which an insulating film containing an insulating resin is provided on an outer periphery of a conductor is used as a magnet wire.

Insulated wires used in a miniaturized electrical or electronic equipment are required to have an insulating film covering a conductor with high adhesion. That is, in such an equipment, the insulated wire is used by winding so as to be pushed into a narrow portion. For example, in a rotating electrical machine, a transformer, or the like, how many coils can be inserted into a slot of a stator core greatly affects the performance thereof. Therefore, the insulated wire is bent with a complicated and small bending radius. At this time, when adhesion between the conductor and a coating resin layer is not sufficient, the insulating film is peeled off from the conductor.

In recent years, there is an increasing demand for weight reduction of the electrical or electronic equipment such as motors. Therefore, there is an increasing demand for the insulated wire using aluminum that is lighter than copper as the conductor. The surface of the aluminum conductor is covered with a chemically stable oxide film, and adhesion between the aluminum conductor and the insulating film is inferior to that of a copper conductor. Therefore, a technique for improving an adhesion strength between the aluminum conductor and the insulating film has been developed.

For example, Patent Literature 1 describes that an insulating film containing a thermoplastic resin having a diphenyl ether group and having a storage elastic modulus of the thermoplastic resin of 0.8 × 10⁵ to 1.1 × 10⁶ Pa at 250°C is formed on an outer periphery in contact with a conductor constructed of aluminum or an aluminum alloy, thereby improving adhesion between the conductor and the insulating film. In addition, Patent Literature 2 discloses an insulation-coated aluminum wire having an insulating coating layer including a resin having at least a benzene ring and an imide ring and is coated with two or more insulating coating layers. In this aluminum wire, by providing an insulating coating layer made of a resin having a high imide ring-containing molar ratio in an innermost layer, and making the imide ring-containing molar ratio between the coating resin layers have a specific relationship, it has been shown to have excellent adhesion to the aluminum conductor, adhesion between insulating coating resin layers, abrasion resistance, and post-processing insulation.

### CITATION LIST

### PATENT LITERATURE

Patent Literature 1: JP-A-2021-157956 ("JP-A" means unexamined published Japanese patent application)
Patent Literature 2: JP-A-2016-021324

### SUMMARY OF THE INVENTION

### TECHNICAL PROBLEM

As described above, it is known that adhesion between the aluminum conductor and the insulating film is improved by applying a specific resin kind as the resin coating layer (insulating film) coating the outer periphery of the aluminum conductor. On the other hand, it is known that a polyaryletherketone (PAEK) resin or a polyphenylene sulfide (PPS) resin, which is generally used as a thermoplastic resin for forming the insulating film, is inferior in the adhesion strength with the conductor when the periphery of the aluminum conductor is directly extrusion-coated.

The present invention provides an insulated wire which is excellent in adhesion between a conductor and a resin coating layer, exhibits a high dielectric breakdown voltage, and is also excellent in heat resistance while using an aluminum conductor as the conductor and using a PAEK resin or a PPS resin as a material of the resin coating layer directly covering the conductor, a method of producing the insulated wire; and a coil, a rotating electrical machine, and an electrical or electronic equipment using the insulated wire.

### SOLUTION TO PROBLEM

As a result of studies to solve the above problem, the present inventors have found that the adhesion between the aluminum conductor and the resin coating layer directly covering the conductor and including the PAEK resin or the PPS resin is remarkably improved by subjecting a surface of the aluminum conductor to CO₂ plasma treatment. The present invention has been further studied and completed based on these findings.

That is, the above problem of the present invention has been solved by the following means.
[1] An insulated wire, including:
   a conductor; and
   a resin coating layer covering a periphery of the conductor,

   wherein the conductor is an aluminum conductor surface-treated with CO₂ plasma, and
   wherein at least a portion of the resin coating layer in contact with the conductor includes at least one kind of a polyaryletherketone resin and a polyphenylene sulfide resin.
[2] The insulated wire described in [1], wherein the polyaryletherketone resin includes at least one kind of a polyetheretherketone resin, a polyetherketoneketone resin, and a polyetherketone resin.
[3] The insulated wire described in [1] or [2], wherein an arithmetic average roughness Sa of a surface of the conductor is 3 µm or less.
[4] The insulated wire described in any one of [1] to [3], wherein an adhesion strength of the resin coating layer to the conductor is 1.0 N/mm or more.
[5] The insulated wire described in any one of [1] to [4], wherein an adhesion strength of the resin coating layer to the conductor after the insulated wire is subjected to heat treatment at 220°C for 100 hours is 1.0 N/mm or more.
[6] A coil, using the insulated wire described in any one of [1] to [5].
[7] A rotating electrical machine or an electrical or electronic equipment, including the coil described in [6].
[8] A method of producing the insulated wire described in any one of [1] to [5], the method including:
   a step of forming a resin coating layer including at least one kind of a polyaryletherketone resin and a polyphenylene sulfide resin at least at a portion in contact with an aluminum conductor by extrusion coating a resin on the aluminum conductor surface-treated with CO₂ plasma.
[9] The method of producing the insulated wire described in [8], wherein the conductor is surface-treated with CO₂ plasma after preheating.

### ADVANTAGEOUS EFFECTS OF INVENTION

The insulated wire of the present invention is excellent in adhesion between the aluminum conductor and the resin coating layer, has a high dielectric breakdown voltage, and is also excellent in thermal resistance. According to the method of producing an insulated wire of the present invention, it is possible to obtain an insulated wire having such excellent performance. In addition, according to the present invention, a coil, a rotating electrical machine, and an electrical or electronic equipment using an insulated wire having such excellent performance are provided.

### BRIEF DESCRIPTION OF DRAWINGS

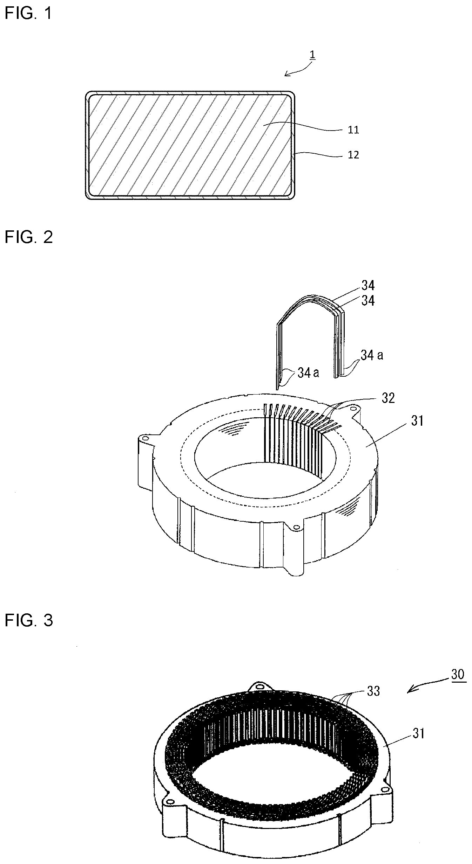

{FIG. 1}
   FIG. 1 is a schematic sectional view showing one embodiment of an insulated wire of the present invention.
{FIG. 2}
   FIG. 2 is a schematic exploded perspective view showing a preferred aspect of a stator used in an electrical or electronic equipment of the present invention.
{FIG. 3}
   FIG. 3 is a schematic perspective view showing the preferred aspect of the stator used in the electrical or electronic equipment of the present invention.

### DESCRIPTION OF EMBODIMENTS

### [Insulated wire]

An insulated wire of the present invention includes a conductor and a resin coating layer that covers a periphery of the conductor and functions as an insulating film. The conductor is an aluminum conductor surface-treated with CO₂ plasma, and at least a portion of the resin coating layer in contact with the conductor includes at least one kind of a PAEK resin and a PPS resin. Typically, when the resin coating layer has a single-layer structure, the resin coating layer is composed of at least one kind of a PAEK resin and a PPS resin, and when the resin coating layer has a multilayer structure composed of two or more kinds of resin layers different from each other, at least an innermost layer in contact with the conductor is composed of at least one kind of a PAEK resin and a PPS resin.

Therefore, the insulated wire of the present invention preferably has the conductor and a resin layer in contact with the conductor and including at least one kind of a PAEK resin and a PPS resin.

In the present invention, the "aluminum conductor" means a conductor formed of aluminum or an aluminum alloy. In the present specification, the aluminum conductor may be simply referred to as a "conductor".

FIG. 1 shows a cross-sectional view of an embodiment of an insulated wire of the present invention. An insulated wire 1 has a conductor 11 and a resin coating layer 12 which is an insulating film formed on an outer peripheral surface of the conductor 11. In the aspect shown in FIG. 1, the conductor 11 has a rectangular (flat angular shape) cross-sectional shape. The cross-sectional shape of the insulated wire 1 of the present invention is preferably similar to that of the conductor 11.

The configuration of the insulated wire of the present invention will be described in more detail below.

### <Conductor>

The aluminum conductor configuring the insulated wire of the present invention is subjected to surface treatment with CO₂ plasma. By subjecting the surface of the aluminum conductor to the CO₂ plasma treatment, the conductor surface is modified, and adhesion to a PAEK resin and a PPS resin, which are originally inferior in adhesion to the aluminum conductor, can be remarkably improved. Therefore, even when the resin coating layer including the PAEK resin or the PPS resin is provided in contact with the aluminum conductor, the adhesion between the conductor and the resin coating layer can be sufficiently improved.

Aluminum or an aluminum alloy conventionally used as a conductor of an insulated wire can be widely applied to the conductor used in the present invention.

The aluminum or the aluminum alloy is not particularly limited as long as it can be used as the conductor of the insulated wire. For example, A1050 (aluminum purity: 99.50% or more), A1070 (aluminum purity: 99.70% or more), and A1080 (aluminum purity: 99.80% or more) which are 1000 series pure aluminum, A6101 which is a 6000 series Al-Mg-Si-based aluminum alloy, and the like can be suitably used. In addition, an Al-Fe-based aluminum alloy containing 0.2 to 1.0 mass% of Fe, 0.02 to 0.3 mass% of Si, 0.001 to 0.01 mass% of Ti and V in total, and the balance consisting of Al and unavoidable impurities, and an aluminum alloy (MSAL) containing 0.05 to 0.3 mass% of Fe, 0.05 to 0.3 mass% of Cu, 0.05 to 0.3 mass% of Mg, 0.02 to 0.3 mass% of Si, 0.001 to 0.01 mass% of Ti and V in total, and the balance consisting of Al and unavoidable impurities, and the like can also be suitably used.

For example, when the insulated wire of the present invention is used for a rotating electrical machine, the conductor used for the insulated wire of the present invention is preferably pure aluminum having a purity of 99.00% or more with which a high current value can be obtained.

In the conductor used in the insulated wire of the present invention, the conductor surface is subjected to surface treatment with CO₂ plasma in advance. It is considered that a specific functional group is introduced into the surface (when an oxide film is formed on the surface of the aluminum conductor, the surface of the oxide film) of the conductor by irradiation of the CO₂ plasma, a surface state having excellent affinity with a PAEK resin or a PPS resin is obtained, and adhesion between the conductor and the resin coating layer is improved. Although the functional group is not necessarily clear, in principle, it is considered that a functional group such as a hydroxy group, a carbonyl group, an aldehyde group, or a carboxyl group is introduced by plasma irradiation. In the present invention, due to the CO₂ plasma treatment of the aluminum conductor surface, a ratio of aluminum hydroxide and ester bonds on the aluminum conductor surface is increased or the like, which is considered to be one factor that specifically improves the adhesion to the PAEK resin and the PPS resin.

Further, in the plasma irradiation step, atoms present in an irradiation nozzle of the CO₂ plasma adhere to the surface of the aluminum conductor together with the CO₂ plasma irradiation. Examples of the atoms derived from the irradiation nozzle include atoms such as a Cr atom, an Fe atom, a Ni atom, and a Cu atom. These atoms may be present on the conductor surface as long as the adhesion between the aluminum conductor and the resin coating layer is not affected, or may be removed from the conductor surface by an operation such as cleaning.

In the aluminum conductor after the CO₂ plasma irradiation, wettability of the conductor surface is improved. On the surface of the aluminum conductor, a contact angle (θ) with respect to water is preferably 15° or less, more preferably 13° or less, and still more preferably 11° or less. In addition, surface free energy (SFE) is preferably 70 mN/m or more, more preferably 75 mN/m or more, and still more preferably 79 mN/m or more. A dispersion component (dispersion force) of the surface free energy is preferably 43 mN/m or more, more preferably 45 mN/m or more, and still more preferably 49 mN/m or more.

When the aluminum conductor used in the present invention is subjected to the CO₂ plasma treatment, plasma irradiation conditions can be appropriately set so that the conductor after the plasma treatment has the above characteristics. Specific conditions of the plasma treatment will be described later.

In the present invention, each of the preferable ranges for the contact angle of the conductor surface with respect to water, the surface free energy, and the dispersion component thereof is a preferable range in the aluminum conductor after the plasma treatment of the aluminum conductor and before the formation of the resin coating layer.

In order to improve an adhesion strength between a metal substrate and a resin material, a method of roughening a substrate surface by subjecting the surface of the metal substrate to laser treatment is known. On the other hand, when the method is applied to the aluminum conductor, laser particles are generated by laser processing, and fine particles are mixed into the resin coating layer at the time of producing the insulated wire, which may cause a decrease in a dielectric breakdown voltage.

In the insulated wire of the present invention, the adhesion to the resin coating layer can be improved by the CO₂ plasma treatment without excessively increasing the surface roughness of the aluminum conductor. From the viewpoint of increasing the dielectric breakdown voltage, the surface of the conductor in the insulated wire of the present invention preferably has an arithmetic average roughness [Sa; ISO standard] of 3 µm or less, more preferably 2.5 µm or less, and still more preferably 2 µm or less. The arithmetic average roughness of the conductor can be determined in accordance with a surface roughness measurement method (ISO 25178, surface texture) by measuring the conductor surface at a magnification of 400 times by using a laser microscope VK-X250 manufactured by KEYENCE CORPORATION, for example.

In the present invention, a preferable range of the arithmetic average roughness of the conductor surface is a preferable range of the aluminum conductor after the plasma treatment of the aluminum conductor and before the formation of the resin coating layer.

The cross-sectional shape orthogonal to a longitudinal direction of the conductor used in the present invention is not particularly limited. For example, a conductor having a circular or rectangular (flat angular shape) cross-sectional shape can be exemplified. In the present invention, a conductor having a rectangular cross-sectional shape, that is, a flat angular conductor is preferable. A conductor having a rectangular cross-sectional shape has a higher space factor with respect to the slot of the stator core during winding than a conductor having a circular cross-sectional shape. Therefore, it is preferable for applications in which many insulated wires are incorporated in a certain narrow space. As a preferable example of the conductor used in the present invention, FIG. 1 shows a case where the conductor has a rectangular cross-section (flat angular shape).

The conductor having a rectangular cross-sectional shape preferably has a shape in which chamfers (curvature radius r) are provided at four corners as shown in FIG. 1 in terms of suppressing partial discharge from corner portions (corner portions). The curvature radius r is preferably 0.6 mm or less, and more preferably in a range from 0.2 to 0.4 mm.

The size of the conductor is not particularly limited, but in a case of a flat angular conductor in the rectangular cross-sectional shape, the width (long side) thereof is preferably 1.0 to 7.0 mm, and more preferably 1.4 to 4.0 mm, and the thickness (short side) is preferably 0.4 to 3.0 mm, and more preferably 0.5 to 2.5 mm. The ratio of length (thickness:width) between the width (long side) and the thickness (short side) is preferably from 1:1 to 1:4. Meanwhile, in a case of a conductor having a circular cross-sectional shape, the diameter thereof is preferably 0.3 to 3.0 mm, and more preferably 0.4 to 2.7 mm.

### <Resin coating layer>

The resin coating layer in the insulated wire of the present invention includes at least one kind of a thermoplastic resin of a PAEK resin and a PPS resin at a portion in contact with the conductor. As described above, the resin coating layer may have a single layer or a multilayer structure of two or more layers.

The thickness of the resin coating layer is not particularly limited, can be 20 to 200 µm, and may be 50 to 100 µm, or 20 to 50 µm.

In the present invention or the present specification, a "polyaryletherketone (PAEK) resin" is a resin composed of a polymer having a phenylene group, an ether group that bonds phenylene groups to each other, and a carbonyl group that bonds phenylene groups to each other. The phenylene group may be unsubstituted or may have a substituent as long as the effect of the present invention is not impaired. Examples of such a substituent include an alkyl group (preferably an alkyl group having 1 to 3 carbon atoms).

Preferable examples of the PAEK resin in the present invention include a polyetherketone (PEK) resin, a polyetheretherketone (PEEK) resin, a polyetherketoneketone (PEKK) resin, a polyetheretherketoneketone (PEEKK) resin, a polyetherketoneetherketoneketone (PEKEKK) resin, and a polyetherketoneester resin. As the PAEK resin used in the resin coating layer of the present invention, one kind of the above resins may be used alone, or two or more kinds of resin components may be mixed and used. The PAEK resin is preferably a resin including at least one kind of a polyetherketone (PEK) resin, a polyetheretherketone (PEEK) resin, and a polyetherketoneketone (PEKK) resin.

The PAEK resin may be crystalline (semi-crystalline) or amorphous.

Specific examples of the PAEK resin and the PPS resin that can be used for the resin coating layer of the present invention include, for example, commercially available products such as KT-880 (trade name) manufactured by Solvay as the PEEK resin, NovaSpire (trade name) manufactured by Solvay as the PEKK resin, VICTREX HT (trade name) manufactured by VICTREX as the PEK resin, and a commercially available product such as SUSTILL (trade name) manufactured by Tosoh Corporation as the PPS resin.

In the case of a multilayer structure in which the insulating film is composed of two or more kinds of resin coating layers different from each other, the innermost resin coating layer in contact with the conductor is preferably composed of the PAEK resin or the PPS resin. In this case, the constituent material of the resin coating layer other than the innermost layer is not particularly limited, and a general-purpose thermosetting resin or thermoplastic resin can be applied.

Examples of the thermosetting resin include thermosetting resins having an imide bond such as polyimide (PI), polyamideimide (PAI), and polyesterimide (PEsI), polyurethane (PU), thermosetting polyester (PEst), H-type polyester (HPE), polyimide hydantoin-modified polyester, polyhydantoin, polybenzimidazole, a melamine resin, and an epoxy resin. Examples of the thermoplastic resin include, in addition to general-purpose engineering plastics such as polyamide (PA) (nylon), polyetherimide (PEI), polyacetal (POM), polycarbonate (PC), polyphenylene ether (including modified polyphenylene ether), polybutylene terephthalate (PBT), polyethylene terephthalate (PET), polyethylene naphthalate (PEN), ultra-high molecular weight polyethylene, and the like; super engineering plastics such as polysulfone (PSF), polyethersulfone (PES), polyphenylene sulfide (PPS), polyarylate (U polymer), polyamideimide, polyetherketone (PEK), polyaryletherketone (PAEK), tetrafluoroethylene-ethylene copolymer (ETFE), polyetheretherketone (PEEK) (including modified polyetheretherketone (modified PEEK)), tetrafluoroethylene-perfluoroalkylvinylether copolymer (PFA), polytetrafluoroethylene (PTFE), thermoplastic polyimide resin (TPI), polyamideimide (PAI), liquid crystal polyester, and the like; further, a polymer alloy based on polyethylene terephthalate (PET) and polyethylene naphthalate (PEN); and a polymer alloy containing the above engineering plastics such as ABS/polycarbonate, nylon 6,6, aromatic polyamide resin (aromatic PA), polyphenylene ether/nylon 6,6, polyphenylene ether/polystyrene, polybutylene terephthalate/polycarbonate, and the like.

The resin coating layer may contain various kinds of additives such as a foaming nucleating agent, an antioxidant, an antistatic agent, an ultraviolet inhibitor, a light stabilizer, a fluorescent brightener, a pigment, a dye, a compatibilizer, a lubricant, a reinforcing agent, a flame retardant, a crosslinking agent, a crosslinking aid, a plasticizer, a thickener, a viscosity-decreasing agent, and an elastomer as long as the effect of the present invention is not impaired.

### (Adhesion strength)

As described above, the insulated wire of the present invention is excellent in adhesion between the conductor and the resin coating layer by using the aluminum conductor subjected to the CO₂ plasma treatment and forming the insulating coating layer including the PAEK resin or the PPS resin in contact with the conductor. In the insulated wire of the present invention, the adhesion strength (adhesion strength) between the conductor and the resin coating layer is preferably 1.0 N/mm or more, more preferably 1.5 N/mm or more, and still more preferably 2.0 N/mm or more. The adhesion strength is ordinarily 10.0 N/mm or less, and may be 5.0 N/mm or less.

In addition, the insulated wire of the present invention is also excellent in heat resistance, and can maintain excellent adhesion strength between the conductor and the resin coating layer even after heat treatment. For example, even when the insulated wire of the present invention is subjected to heat treatment at 220°C for 100 hours, the adhesion strength between the conductor and the resin coating layer can be 1.0 N/mm or more, 1.5 N/mm or more, or 2.0 N/mm or more. In addition, the adhesion strength is ordinarily 10.0 N/mm or less, and may be 5.0 N/mm or less.

The adhesion strength between the aluminum conductor and the resin coating layer can be determined by, for example, the method described in Examples. In addition, in a case where the resin coating layer is thin and thus the adhesion strength cannot be measured due to breakage of the resin coating layer in the adhesion strength measurement test described in Examples, it is preferable to measure the adhesion strength by a surface and interface cutting analysis system (SAICAS) method. For example, when the adhesion strength between the conductor and the resin coating layer is measured for an insulated wire having a resin coating layer of 50 µm or less, the adhesion strength can be measured by using a SAICAS device (DN-20S, manufactured by DAIPLA WINTES CO.,LTD.) in a constant speed mode with a horizontal speed: 2 µm/sec; a pressing load: 20 N, a vertical speed: 0.2 µm/sec; and a pressing load: 10 N.

### (Dielectric breakdown voltage)

In addition, in the insulated wire of the present invention, the dielectric breakdown voltage is preferably 100 kV/mm or more, more preferably 120 kV/mm or more, and still more preferably 130 kV/mm or more. The dielectric breakdown voltage can be determined by the method described in Examples.

### [Method of producing insulated wire]

### (CO₂ plasma treatment)

In the method of producing the insulated wire of the present invention, an aluminum conductor subjected to CO₂ plasma treatment is used as a conductor of the insulated wire. Surface modification of the aluminum conductor can be performed by generating CO₂ plasma on the surface of the aluminum conductor in an atmospheric pressure state by applying a high frequency/high voltage by flowing CO₂ gas to an electrode, or irradiating the surface of the aluminum conductor with the generated CO₂ plasma.

In a source gas of a plasma gas used for the CO₂ plasma irradiation, a CO₂ gas concentration is ordinarily 5 Vol% or more (5 vol% or more), preferably 50 Vol% or more, more preferably 70 Vol% or more, still more preferably 80 Vol% or more, still more preferably 90 Vol% or more, and still more preferably 95 Vol% or more. The CO₂ gas concentration may be 100 Vol%.

Various kinds of conditions of the CO₂ plasma treatment can be appropriately set according to the intended surface modification. A plasma treatment time, power, a frequency, a conductor temperature, an irradiation direction, and the like can be appropriately selected to perform the intended surface modification.

The CO₂ plasma treatment is preferably performed either before or after (before conductor preheating or after conductor preheating) conductor preheating (preheating) for forming the resin coating layer, or both before and after the conductor preheating. In the present invention or the present specification, the "conductor preheating" means preheating the conductor surface in advance when extrusion coating a resin on the conductor. The conductor preheating can be performed by, for example, an induction heating furnace or the like. A heating temperature is not particularly limited, and for example, a conductor temperature immediately before extrusion can be set to 200 to 600°C, the conductor temperature immediately before extrusion is more preferably set to 300 to 500°C, and the conductor temperature immediately before extrusion is still more preferably set to 350 to 450°C. Since the temperature of the aluminum conductor also increases by the CO₂ plasma treatment, the conductor preheating step can be substituted by increasing the time of the plasma treatment step. Such an aspect is also included in the aspect in which conductor preheating is performed.

### (Formation of resin coating layer)

The insulated wire of the present invention can be obtained by forming a resin coating layer by extrusion coating a composition including a specific thermoplastic resin by using a screw of an extruder with the aluminum conductor after the CO₂ plasma treatment as a core wire, for example. The extrusion coating method itself may be performed by an ordinary method. The temperature before head of the extrusion coating can be appropriately set in consideration of adhesion between the conductor and the resin coating layer. For example, the temperature before head is preferably 350°C or higher, more preferably 400°C or higher, and still more preferably 450°C or higher.

In addition, when an amorphous thermoplastic resin is used, in addition to the extrusion coating, it can also be formed by coating and baking a varnish dissolved in an organic solvent or the like on an enameled wire by using a die having a shape similar to the shape of the conductor.

### [Coil, rotating electrical machine, and electrical or electronic equipment]

The insulated wire of the present invention can be used as a coil in a field requiring electric characteristics (withstand voltage) and heat resistance, such as a rotating electrical machine and various kinds of electrical or electronic equipment. For example, the insulated wire of the present invention is used for a motor, a transformer, and the like, and can constitute a high-performance rotating electrical machine and an electrical or electronic equipment. In particular, it is suitably used as a winding wire for a driving motor of a hybrid vehicle (HV) or an electric vehicle (EV).

Examples of the coil of the present invention include a coil formed by subjecting the insulated wire of the present invention to coil processing, and a coil formed by bending the insulated wire of the present invention and then electrically coupling predetermined parts.

The coil formed by subjecting the insulated wire of the present invention to coil processing is not particularly limited, and examples thereof include a coil formed by winding a long insulated wire in a spiral. In such a coil, the number of turns of the insulated wire or the like is not particularly limited. Ordinarily, an iron core or the like is used to wind the insulated wire.

Examples of the coil formed by bending the insulated wire of the present invention and then electrically coupling predetermined parts include a coil used for a stator of a rotating electrical machine or the like. Coils 33 (see FIGS. 2 and 3) are the example of such coil. The coils 33 are formed by cutting the insulated wire of the present invention in a predetermined length, bending the cut pieces in a U shape or the like to prepare a plurality of wire segments 34, and alternately coupling two open ends (terminals) 34a of the U shape or the like of each wire segment 34, as shown in FIG. 2.

The electrical or electronic equipment using the coil thus produced is not particularly limited. One preferred aspect of such electrical or electronic equipment is a transformer. In addition, examples of the preferred aspect thereof include a rotating electrical machine (particularly, driving motors of HV and EV) including a stator 30 shown in FIGS. 2 and 3. Such a rotating electrical machine can be configured similar to a conventional rotating electrical machine except for being provided with the stator 30.

The stator 30 has a configuration similar to a configuration of a conventional stator except that the wire segments 34 are formed using the insulated wire of the present invention. That is, the stator 30 has a stator core 31, and the coils 33 in which, as shown in FIG. 2, the wire segments 34 formed using the insulated wire of the present invention are incorporated in slots 32 of the stator core 31 and the open ends 34a are electrically coupled. The coils 33 are fixed such that adjacent fusing layers, or the fusing layer and the slots 32 are bonded. Herein, the wire segments 34 may be incorporated in each slot 32 one by one. However, it is preferable that a pair of wire segments 34 are incorporated in each slot 32 as shown in FIG. 2. In the stator 30, the coils 33, which are formed by alternately coupling the open ends 34a that are two ends of the wire segments 34 which have been bent as described above, are housed in the slots 32 of the stator core 31. At this time, the open ends 34a of the wire segments 34 may be coupled and then housed in the slots 32, or after the wire segments 34 are housed in the slots 32, the open ends 34a of the wire segments 34 may be bent and coupled.

### EXAMPLES

Hereinafter, the present invention will be described in more detail with reference to Examples, but the present invention is not limited to these aspects.

### <Producing method>

### [Example 1]

An insulated wire including an aluminum conductor and an insulating film (resin coating layer) was produced by the following method.

As the aluminum conductor, a flat angular conductor having a flat angular cross-section (long side 3.5 mm × short side 2.0 mm, with a curvature radius r of chamfered four corners = 0.3 mm) (made of aluminum with a purity of 99.50; A1050) was used. The aluminum conductor was preheated in an induction heating furnace so that the conductor temperature immediately before extrusion was 400°C, and CO₂ plasma irradiation was performed under the conditions of a CO₂ gas concentration of 99 Vol%, an output of 500 W, and an irradiation time of 0.5 seconds. A surface roughness (arithmetic average roughness [Sa]; ISO standard) of the aluminum conductor after the plasma treatment was measured according to surface roughness measurement (ISO 25178, surface texture) by using a laser microscope VK-X250 (magnification: 400 times) manufactured by KEYENCE CORPORATION.

Using the aluminum conductor after the CO₂ plasma treatment as the core wire and using an extruder equipped with a 30 mm full-flight screw (screw L/D = 25, screw compression ratio = 3) as the screw, a polyetheretherketone (PEEK) resin was extrusion-coated on the core wire by using an extrusion die such that the outer shape of the cross-section of the insulating film was similar to the shape of the conductor. In this way, the insulated wire of Example 1 was obtained in which the insulating film made of the PEEK resin having a thickness of 100 µm was formed on the outer periphery of the conductor. As a comparative object of the following adhesion strength test, an insulated wire as the comparative object was obtained in the same manner as in Example 1 except that a plasma-untreated aluminum conductor was used.

### [Examples 2 to 12]

Insulated wires of Examples 2 to 12 shown in the following table were produced in a similar manner to the above except that a type (material) of the aluminum conductor and a type of the resin constituting the insulating film were as shown in the following Table 1. Detailed information of the conductor and the resin will be described below. In addition, as comparative objects of the following adhesion strength test, insulated wires as the comparative objects were obtained in the same manner as in Examples 2 to 12 except that a plasma-untreated conductor was used.

### -Conductor-

·A1070: Aluminum with a purity of 99.70
·A1080: Aluminum with a purity of 99.80
·MSAL :Al-0.2Fe-0.2Cu-0.1Mg
·Al-Fe:Al-0.6Fe
·A6101: Al-Mg-Si-based

### -Resin-

·PEKK: OXPEKK-IG100 (trade name), manufactured by Oxford Performance Materials Inc.
·PPS: FZ-2100 (trade name), manufactured by DIC Corporation
·PEK: HT-G22 (trade name), manufactured by VICTREX Corporation

### [Comparative Example 1]

An insulated wire of Comparative Example 1 shown in the table below was obtained in the same manner as described above except that the insulated wire was produced by using a plasma-untreated aluminum conductor. Since the plasma treatment is not performed in Comparative Example 1, a surface roughness of the conductor shown in Table 1 is a surface roughness of the used conductor as it is.

### [Comparative Examples 2 to 6]

Insulated wires of Comparative Examples 2 to 6 shown in the table below were obtained in the same manner as described above except that different plasma treatments were performed instead of the CO₂ plasma. In addition, as comparative objects of the following adhesion strength test, insulated wires as the comparative objects were obtained in the same manner as in Comparative Examples 2 to 6 except that a plasma-untreated conductor was used. The plasma irradiation conditions were the output of 500 W and the irradiation time of 0.5 seconds.

### [Comparative Example 7]

As an aluminum conductor, a flat angular conductor having a flat angular cross-section (long side 3.5 mm × short side 2.0 mm, with a curvature radius r of chamfered four corners = 0.3 mm) (made of aluminum with a purity of 99.70; A1070) was used. The aluminum conductor was irradiated with a laser beam under conditions of pulse energy of 1 mJ and a working density of 500 points/mm². The surface roughness (arithmetic average roughness [Sa]) of the conductor after the laser treatment was measured according to surface roughness measurement (ISO 25178, surface texture) by using a laser microscope VK-X250 (magnification: 400 times) manufactured by KEYENCE CORPORATION.

An insulating film shown in the following table was formed in the same manner as described above except that the obtained aluminum conductor after laser treatment was used to obtain an insulated wire of Comparative Example 7. As a comparative object of the following adhesion strength test, an insulated wire as the comparative object was obtained in the same manner as in Comparative Example 7 except that a non-laser-irradiated conductor was used.

### [Reference Example 1]

An insulated wire of Reference Example 1 shown in the table below was produced in the same manner as described above except that a polyetherimide (PEI) resin was used instead of the PEEK resin. As a comparative object of the following adhesion strength test, an insulated wire was obtained in the same manner as in Reference Example 1 except that a plasma-untreated conductor was used.

The adhesion strength, the dielectric breakdown voltage, and the heat resistance of each insulated wire produced above were evaluated as follows. The results obtained are shown collectively in the following Table 1.

### <Evaluation method>

### [Measurement of adhesion strength]

The adhesion strength between the aluminum conductor and the insulating film was measured by the following method in accordance with Japanese Industrial Standard: JIS Z 0237 2009.

For the insulated wires (insulated wire as a comparative object produced by using a surface-untreated (before surface treatment) aluminum conductor and insulated wire produced by using a surface-treated (plasma treated or laser treated) aluminum conductor) of the respective Examples and Comparative Examples produced above, incisions of 50 mm or more in parallel with a width of 1 mm in the longitudinal direction were made. These incisions were made to reach the conductor. The entire insulating film between the incisions was peeled off from the conductor by using a tensile tester (produced by Shimadzu Corporation, device name "Autograph AGSJ"), a force (180° peel strength, peel speed 4 mm/min) applied at the time of peeling was measured, and a maximum peeling strength was defined as the adhesion strength (adhesion strength). The results are shown in Table 1.

In addition, a change rate in adhesion strength due to the surface treatment was calculated by a calculation formula [(adhesion strength between conductor and insulating film after surface treatment)/(adhesion strength between conductor and insulating film before surface treatment)] (in Table 1, it is expressed as [after/before]) and quantified. The results are shown in Table 1.

### [Dielectric breakdown voltage]

An aluminum foil having a width of about 20 mm was wound around a center of a sample (linear test piece) obtained by cutting each insulated wire to a length of 50 cm, and an electrode was provided on the aluminum foil. In addition, the electrode was provided on the conductor exposed by peeling the insulating film up to a distance of 5 mm from one end of the insulated wire. An alternating-current voltage with a sine wave of 50 Hz was applied between these electrodes at a boosting rate of 500 V/sec, and a voltage (effective value) when dielectric breakdown occurred was measured and taken as the dielectric breakdown voltage. The temperature of the measurement environment was room temperature (about 23°C). The results are shown in Table 1.

### [Evaluation of adhesion strength after heat treatment]

Each insulated wire produced by using the surface-treated aluminum conductor was cut into a length of 300 mm, and subjected to heat treatment in the atmosphere for 100 hours under a temperature condition of 220°C. The adhesion strength of each insulated wire after the heat treatment was measured in the same manner as described above. The results are shown in Table 1.

**Table 1**

| | | Conductor | | | Resin |
|---|---|---|---|---|---|
| | | Type | Surface treatment | Surface roughness (arithmetic average roughness) | |
| | | | | Sa (µm) | |
| | 1 | A1050 | CO₂ plasma | 1.5 | PEEK |
| | 2 | A1070 | CO₂ plasma | 1.7 | PEEK |
| | 3 | A1080 | CO₂ plasma | 1.3 | PEEK |
| | 4 | MSAL | CO₂ plasma | 1.2 | PEEK |
| | 5 | AL-Fe | CO₂ plasma | 1.1 | PEEK |
| | 6 | A6101 | CO₂ plasma | 1.7 | PEEK |
| Example | 7 | A1070 | CO₂ plasma | 2.2 | PEKK |
| | 8 | A1070 | CO₂ plasma | 0.6 | PEKK |
| | 9 | A1070 | CO₂ plasma | 1.0 | PPS |
| | 10 | A1070 | CO₂ plasma | 1.1 | PPS |
| | 11 | A1070 | CO₂ plasma | 2.5 | PEK |
| | 12 | A1070 | CO₂ plasma | 1.5 | PEK |
| Comparative Example | 1 | A1070 | Not performed | 1.3 | PEEK |
| | 2 | A1070 | N₂ plasma | 0.4 | PEEK |
| | 3 | A1070 | O₂ plasma | 1.5 | PEEK |
| | 4 | A1070 | Ar plasma | 1.1 | PEEK |
| | 5 | A1070 | N₂/H₂ plasma | 0.7 | PEEK |
| | 6 | A1070 | Air plasma | 1.1 | PEEK |
| | 7 | A1070 | Laser roughening | 9.0 | PEEK |
| Reference Example | 1 | A1070 | CO₂ plasma | 1.5 | PEI |

**Table 1 (continued)**

| | | Evaluation | | | | |
|---|---|---|---|---|---|---|
| | | Adhesion strength (before surface treatment) | Adhesion strength (after surface treatment) | Change rate (after/before) | Dielectric breakdown voltage | Adhesion strength (after heat treatment) |
| | | N/mm | N/mm | - | kV/mm | N/mm |
| | 1 | 0.1 | 3.2 | 32 | 144 | 3.0 |
| | 2 | 0.1 | 2.5 | 25 | 151 | 2.5 |
| | 3 | 0.1 | 2.5 | 25 | 170 | 2.3 |
| | 4 | 0.1 | 2.2 | 22 | 171 | 2.3 |
| | 5 | 0.1 | 3.4 | 34 | 155 | 3.2 |
| | 6 | 0.1 | 3.2 | 32 | 139 | 3.0 |
| Example | 7 | 0.1 | 2.4 | 24 | 121 | 2.2 |
| | 8 | 0.1 | 2.1 | 21 | 169 | 2.0 |
| | 9 | 0.1 | 1.9 | 19 | 201 | 1.9 |
| | 10 | 0.1 | 1.7 | 17 | 230 | 1.6 |
| | 11 | 0.1 | 2.6 | 26 | 130 | 2.4 |
| | 12 | 0.1 | 1.8 | 18 | 166 | 1.8 |
| Comparative Example | 1 | 0.1 | - | - | 151 | 0 |
| | 2 | 0.1 | 0.5 | 5 | 161 | 0.4 |
| | 3 | 0.1 | 0.4 | 4 | 180 | 0.3 |
| | 4 | 0.1 | 0.2 | 2 | 155 | 0.15 |
| | 5 | 0.1 | 0.2 | 2 | 149 | 0.15 |
| | 6 | 0.1 | 0.3 | 3 | 171 | 0.24 |
| | 7 | 0.1 | 3.1 | 31 | 95 | 2.9 |
| Reference Example | 1 | 0.75 | 1.5 | 2 | 242 | 1.2 |

In the insulated wire of Comparative Example 1, since the aluminum conductor was not subjected to the surface treatment, the adhesion of the insulating film made of the PEEK resin to the aluminum conductor was inferior. In addition, in all the insulated wires of Comparative Examples 2 to 6 in which the plasma treatment was performed by using various kinds of plasmas instead of the CO₂ plasma, the adhesion between the aluminum conductor after the plasma irradiation and the insulating film made of the PEEK resin was inferior. In any of Comparative Examples, the adhesion strength was 0.5 N/m or less, and the change rate in adhesion strength by the plasma irradiation was five times or less. In addition, when the insulated wire was subjected to the heat treatment, the adhesion strength was further reduced.

In addition, in Comparative Example 7 in which the surface of the aluminum conductor was roughened by the laser treatment instead of the plasma treatment, the adhesion between the aluminum conductor and the insulating film made of the PEEK resin was improved by the roughening, but the dielectric breakdown voltage was 100 kV/mm or less. This was considered to be due to the aluminum fine particles produced by the laser roughening being mixed into the insulating film, which reduced the dielectric breakdown voltage.

Furthermore, in the insulated wire of Reference Example 1 produced by using the PEI resin, the adhesion between the aluminum conductor and the insulating film made of the PEI resin was high without performing the CO₂ plasma treatment, and conversely, this adhesion did not change much even when the aluminum conductor was subjected to the CO₂ plasma treatment. From this, it is found that the effect of the CO₂ plasma treatment of the aluminum conductor becomes apparent when the PAEK resin or the PPS resin is used as the insulating film in contact with the conductor.

On the other hand, in all the insulated wires of Examples 1 to 12 satisfying the configuration of the present invention, the aluminum conductor was subjected to the CO₂ plasma treatment, so that the adhesion between the conductor and the insulating film made of any one of PEEK, PEKK, PPS, and PEK resins was excellent, and the adhesion strength was 1 N/mm or more. In addition, it was shown that the adhesion strength with the insulating film was increased by 17 times or more by the CO₂ plasma treatment. In addition, it was shown that all the insulated wires showed a high dielectric breakdown voltage and had excellent adhesion even after the heat treatment.

Having described the present invention as related to the embodiment, it is our intention that the present invention not be limited by any of the details of the description, unless otherwise specified, but rather be construed broadly within its spirit and scope as set out in the accompanying claims.

The present application claims priority of Patent Application No. 2022-129364 filed in Japan on August 15, 2022, which is herein incorporated by reference as part of the present specification.

### DESCRIPTION OF SYMBOLS

- 1: Insulated wire
- 11: Conductor
- 12: Resin coating layer
- 30: Stator
- 31: Stator core
- 32: Slot
- 33: Coil
- 34: Wire segment
- 34a: Open end

## Claims

1. An insulated wire, comprising:
a conductor; and
a resin coating layer covering a periphery of the conductor,
wherein the conductor is an aluminum conductor surface-treated with CO₂ plasma, and
wherein at least a portion of the resin coating layer in contact with the conductor includes at least one kind of a polyaryletherketone resin and a polyphenylene sulfide resin.

2. The insulated wire according to claim 1, wherein the polyaryletherketone resin includes at least one kind of a polyetheretherketone resin, a polyetherketoneketone resin, and a polyetherketone resin.

3. The insulated wire according to claim 1 or 2, wherein an arithmetic average roughness Sa of a surface of the conductor is 3 µm or less.

4. The insulated wire according to any one of claims 1 to 3, wherein an adhesion strength of the resin coating layer to the conductor is 1.0 N/mm or more.

5. The insulated wire according to any one of claims 1 to 4, wherein an adhesion strength of the resin coating layer to the conductor after the insulated wire is subjected to heat treatment at 220°C for 100 hours is 1.0 N/mm or more.

6. A coil, using the insulated wire according to any one of claims 1 to 5.

7. A rotating electrical machine or an electrical or electronic equipment, comprising the coil according to claim 6.

8. A method of producing the insulated wire according to any one of claims 1 to 5, the method comprising:
a step of forming a resin coating layer including at least one kind of a polyaryletherketone resin and a polyphenylene sulfide resin at least at a portion in contact with an aluminum conductor by extrusion coating a resin on the aluminum conductor surface-treated with CO₂ plasma.

9. The method of producing the insulated wire according to claim 8, wherein the conductor is surface-treated with CO₂ plasma after preheating.
